# EUROPÄISCHE PATENTSCHRIFT

(11) **EP 2 936 991 B1**
(45) Veröffentlichungstag und Bekanntmachung des Hinweises auf die Patenterteilung: **28.03.2018**
(21) Anmeldenummer: 14165741.1
(22) Anmeldetag: 24.04.2014
(51) Int. Cl.: A23C 13/12, A23C 13/08

(54) **Haltbare Sahne ohne Konservierungsmittel**
Long-life cream without preservatives
Lait stérilisé sans conservateurs

(43) Veröffentlichungstag der Anmeldung: 28.10.2015
(73) Patentinhaber: DMK Deutsches Milchkontor GmbH, 27404 Zeven (DE)
(72) Erfinder: Diekhaus, Martin, 49451 Holdorf (DE)
(74) Vertreter: Fabry, Bernd

(56) Entgegenhaltungen:
- EP-A1- 0 563 593
- EP-A1- 2 092 832
- EP-A2- 0 167 994
- CA-A1- 2 084 332
- US-A- 3 117 879
- KARSTEN KHLER ET AL: "Melt emulsificationIs there a chance to produce particles without additives?", PARTICUOLOGY, ELSEVIER, AMSTERDAM, NL, Bd. 9, Nr. 5, 14. März 2011 (2011-03-14), Seiten 506-509, XP028322895, ISSN: 1674-2001, DOI: 10.1016/J.PARTIC.2011.03.009 [gefunden am 2011-07-22]
- "Emulsionen"; "2" In: "Römpp Chemie Lexikon", 1995, Thieme vol. 9, pages 1158-1159,

## Beschreibung

### GEBIET DER ERFINDUNG

Die Erfindung befindet sich auf dem Gebiet der Lebensmitteltechnologie und betrifft ein Verfahren zur Herstellung von (O/W)-Emulsionen, und zwar von Sahneerzeugnissen mit verbesserter Lagerstabilität.

### STAND DER TECHNIK

Emulsionen gehören zu den dispersen Systemen, die auch Dispersionen genannt werden. Eine Emulsion ist eine Dispersion aus zwei nicht mischbaren Flüssigkeiten, in der Regel Öl und Wasser, wobei eine der Flüssigkeiten in der anderen in Form dispergierter Tröpfchen vorliegt. Je nach Mengenverhältnissen der beiden nicht mischbaren Phasen spricht man von sogenannten Öl-in-Wasser (O/W)-Emulsionen oder Wasser-in-ÖI (W/O)-Emulsionen.

Viele Lebensmittel sind flüssige oder erstarrte feste Emulsionen bzw. Suspensionen, die bei der Herstellung Emulsionen waren (Milch und Milchprodukte, Feinkostprodukte wie z.B. Mayonnaise oder Saucen, Brotbeläge, Dressings, sowie viele Desserts). Emulsionen findet man aber nicht nur im Produktbereich der Lebensmittel, sondern auch als Zwischen- und Endprodukte in vielen anderen Industriezweigen, z.B. Kosmetika, Pharmazeutika, Bitumen, Reinigungsmittel, Farben, Lacke, agrochemische Produkte und Beschichtungen.

Typische Tropfendurchmesser in einer Emulsion liegen im Größenbereich von 0,1-100 µm. Streng genommen sind solche Systeme "Makroemulsionen", im allgemeinen Sprachgebrauch spricht man aber nur von "Emulsionen".

Da die freie Energie in einem solchen dispersen System gegenüber den getrennten Phasen um die Grenzflächenenergie erhöht ist, sind Emulsionen thermodynamisch instabil. Nicht stabilisierte Tropfen bilden Agglomerate (Flocken) oder fließen zusammen (Koaleszieren). Aufgrund des Dichteunterschieds beider Phasen ist zudem Sedimentation bzw. Aufrahmen der Tropfen zu beobachten. Des Weiteren kommt es zur Ostwald-Reifung aufgrund osmotischer Effekte. Im schlimmsten Fall bricht eine Emulsion, d.h. die Phasen trennen sich wieder und der disperse Charakter geht vollständig verloren. Wird eine Emulsion instabil, verliert sie ihre Qualität innerhalb der vorgegebenen Mindesthaltbarkeitszeit und kann somit nicht auf den Mark gebracht werden.

Beispiele für (O/W)-Emulsionen im Lebensmittelbereich sind u.a.: Milch, Sahne, Joghurt, Käse, Mayonnaise, Speiseeis und Dressings.

Sahne - die auch als Rahm oder Obers bezeichnet wird - ist eine (O/W)-Emulsion aus Milchfett und Wasser, doch die Fetttröpfchen sind grösser und zahlreicher und machen die Sahne noch weißer als Milch. Sahne enthält weniger Milcheiweiß als Milch. Die Sahne dient als Basis für die Herstellung von Butter und Käse. Saure und süße Sahne erfreuen sich in der Küche größter Beliebtheit. Daraus lassen sich Saucen, Süßspeisen, Dips und vieles mehr herstellen.

Sahne entsteht durch das sogenannte Aufrahmen der Milch. Als Aufrahmen bezeichnet man, wenn die Fettkügelchen in der Milch, an die Oberfläche der Milch steigen und sich dort als Rahm absetzen. Der Rahm bzw. die Sahne lässt sich einfach von der Milch abschöpfen. Die Milch kann nur dann aufrahmen, wenn sie zuvor nicht homogenisiert wurde. Wird die Milch homogenisiert, wird der Durchmesser der Fettkügelchen stark reduziert. Die Fettkügelchen verteilen sich dadurch besser in der Milch, sodass sie nicht mehr an die Oberfläche der Milch steigen können.

Heutzutage wird Sahne industriell hergestellt. Dabei wird die Sahne jedoch nicht durch Aufrahmen der Milch hergestellt, sondern durch das sogenannte Zentrifugieren gewonnen. Die Milch wird für diesen Zweck in eine Zentrifuge gegeben, die als Separator bezeichnet wird. Dort wird die Milch so stark geschleudert, dass sich das Milchfett von der Milch trennt und nur noch Magermilch mit einem Fettgehalt von 0,03 bis 0,06 Prozent zurückbleibt. Indem der Magermilch wieder ein Teil des Milchfetts hinzugefügt wird, erhält man Sahneerzeugnisse.

Bei der Sahne muss zwischen ungesäuerter und gesäuerter Sahne unterschieden werden. Darüber hinaus gibt es Sahneerzeugnisse, die sich in ihrem Fettgehalt unterscheiden. Folgende Fettstufen der Sahnesorten sind zu erwähnen: Sahne (25-29 Gew.-%), Schlagsahne (30-33 Gew.-%), Schlagsahne "extra" (36 Gew.-%), Kaffeesahne (10-15 Gew.-%).

Sahne wird in vielerlei Form zur Herstellung von Lebensmitteln bzw. bei der Zubereitung von Speisen benötigt. Für viele dieser Anwendungsgebiete reicht die übliche Haltbarkeit der Sahne, die in der Regel bei wenigen Tagen liegt, nicht aus. Das ist vor allem dann der Fall, wenn Witterungsbedingungen eine Ernte von Gemüse - z.B. Spinat - nicht möglich machen, aber die Sahne für die Weiterverarbeitung bereits geliefert worden ist. Dies stellt ein großes Problem für die Hersteller dar, da das Produkt unter Umständen nicht mehr verwendet werden kann.

Handelsübliche Sahne ist aufgrund ihres Gehaltes an Casein bei niedrigeren pH-Werten instabil und kann aus diesem Grund nicht in Kombination mit Früchten und Beeren verarbeitet und über einen längeren Zeitraum gelagert werden. Benutzt werden diese Stabilisatoren beispielsweise bei der Herstellung von Sahnetorten, wodurch diese stabilisierenden Zusätze verhindert werden soll, dass die aufgeschlagene Sahne vorzeitig in sich zusammenfällt. Auch wird dadurch gewährleistet, dass die Sahne froststabil ist.

DE42 26 850A1beschreibt ein Verfahren zur Behandlung und/oder einer Fettemulsion, wobei die Emulsion mit Ultraschall behandelt wird. Vorzugsweise werden der zu behandelnden Emulsion vor und/oder während der Ultraschallbehandlung Stabilisatoren zugegeben.

EP1 086 625B1 und EP0 805 629B1beschreiben ein Verfahren zur Herstellung eines Rahm und Gelatine enthaltenden Milchproduktes.

DE60 2004 001 002T2 beschreibt die Verwendung einer Zuckeralkoholzusammensetzung umfassend σ-D-Glucopyranosyl-1,6-sorbit zur Herstellung von Sahne.

DE44 36 989A1beschreibt die Anwendung von aus Roggenmahlprodukten zu isolierenden wasserlöslichen Inhaltsstoffen, wie Proteine und Pentosane, als stabilisierender Zusatz für Sahne.

EP1 825 759B1 beschreibt ein Verfahren zur Herstellung von Rahm aus Milch, wobei das Verfahren das Verringern einer Konzentration des gelösten Sauerstoffs in der Milch vor dem Abtrennen des Rahms umfasst.

EP2 594 137A1, beschreibt ein Verfahren zur Herstellung einer tiefgekühlte Sahne, die aufgeschlagen werden muss, wobei die frische Sahne auf eine Temperaturwert von -5 oder unter -5 °C gekühlt in einem Zeitintervall von 8 Minuten oder unter 8 Minuten wird.

Diese Verfahren des Stands der Technik haben jedoch den Nachteil, dass die hergestellten Sahneerzeugnisse Stabilisatoren - in der Regel auf Gelatinebasis hergestellt - beinhalten. Sie bedürfen einer besonderen Zubereitung, was einen zusätzlichen technologischen Aufwand erforderlich macht. CA 2 084 332 A1 offenbart ein Verfahren zur Herstellung eines Sahneerzeugnisses mit langer Haltbarkeit, welches zwei Hochdruckhomogenisierungsschritte umfasst.
US 3 117 879 A offenbart ein Verfahren zur Herstellung von Sahne mit verbesserter Lagerstabilität und einer durchschnittliche Partikelgröße von unter 2 µm, welches bevorzugt drei Hochdruckhomogenisierungsschritte umfasst.

Aufgrund des wachsenden Interesses eines großen Teils der Bevölkerung an "gesunder Ernährung" und gesunder Lebensweise allgemein, gibt es ein zunehmendes Interesse an die Herstellung von qualitativ hochwertigen und bekömmlichen Nahrungsmitteln mit natürlichen Zutaten ohne Zusatzstoffe. Es besteht daher im Markt ein starkes und zunehmendes Bedürfnis nach Milcherzeugnisse, die eine verbesserte Stabilität aufweisen und keine Stabilisatoren enthalten.

Die Aufgabe der vorliegenden Erfindung hat somit darin bestanden, eine Sahne zur Verfügung zu stellen, die eine Haltbarkeit von mindestens 4 Wochen hat, jedoch keine Konservierungsmittel enthält, da diese im Rahmen einer "gesunden" Ernährung völlig unerwünscht sind.

### BESCHREIBUNG DER ERFINDUNG

Gegenstand der Erfindung ist ein Verfahren zur Herstellung eines Sahneerzeugnisses mit einer durchschnittlichen Partikelgröße unter 3 µm, bei dem man
a) ein Sahneerzeugnis mit einem Fettgehalt nicht größer als 40 Gew.-% einer ersten Hochdruckhomogenisierung bei einer Temperatur im Bereich von 50 °C bis 100 °C unterwirft, wobei der Homogenisierdruck im Bereich von 10 bis 150 bar liegt,
b) das in Schritt a) erhaltene Produkt auf 135 °C bis 150 °C erhitzt,
c) das in Schritt b) erhaltene Produkt auf eine Temperatur unter 100 °C abkühlt,
d) das in Schritt c) erhaltene Produkt einer zweiten Hochdruckhomogenisierung bei einer Temperatur im Bereich von 50 °C bis 80 °C und einem Homogenisierdruck im Bereich von 60 bis 100 bar unterwirft,
e) das in Schritt d) erhaltene Produkt auf eine Temperatur von 0 °C bis 10 °C abkühlt, wobei die Kühlungstemperatur in einem Zeitintervall von 1 bis 10 Sekunden erreicht wird, und
f) das in Schritt e) erhaltene Produkt abfüllt.

Offenbart wird weiterhin ein Milcherzeugnis mit einer durchschnittlichen Partikelgröße je nach Fettgehalt von etwa 1 bis etwa 4 µm, und dessen Herstellungsverfahren.

Offenbart wird weiterhin ein Sahneerzeugnis, das länger haltbar ist, jedoch keine Konservierungsmittel enthält, und dessen Herstellungsverfahren.

Überraschenderweise wurde gefunden, dass mittels eines Herstellungsverfahrens, eine zweistufige Homogenisierung- und zweistufige Kühlungsschritte umfassend, ein Sahneerzeugnis hergestellt wird, welches eine durchschnittliche Partikelgröße unter 3 µm aufweist. Außerdem zeichnen sich diese Sahneerzeugnisse dadurch aus, dass sie eine Haltbarkeit von mindestens 4 Wochen haben, obwohl sie keine Konservierungsmittel enthalten.

Unter einer "Emulsion" im Sinne dieser Erfindung ist dabei jede Lösung von Fettkügelchen in Wasser zu verstehen. Eine "Emulsion" im Sinne dieser Erfindung liegt unabhängig davon vor, ob noch weitere Bestandteile in der Lösung erhalten sind oder nicht. Insbesondere ist auch ein sogenanntes Emulsionsubstrat, bei dem in der Lösung noch weitere Bestandteile enthalten sind wie beispielsweise eine Dispersion (dispergierte Inhaltsstoffe) und /oder eine Suspension und/oder eine kolloidale Lösung und/oder eine echte Lösung (gelöste Inhaltsstoffe, Salze), als Emulsion im Sinne dieser Erfindung anzusehen. In derartigen Emulsionssubstraten können beispielsweise Inhaltsstoffe, insbesondere dispergierte und/oder echt gelöste Inhaltsstoffe enthalten sein, die als Emulgatoren wirken und zur Förderung von Emulsions- bzw. Reemulsionsvorgängen verwendet werden können bzw. derartige Vorgänge beschleunigen können.

Die (O/W)-Emulsion der vorliegenden Erfindung ist ein Sahneerzeugnis.

Der Fettgehalt in dem in der vorliegenden Erfindung verwendeten Sahneerzeugnis kann vorzugsweise im Bereich von etwa 27 - 40 Gew.-%, und insbesondere im Bereich von etwa 30 - 36 Gew.-% liegen.

Gemäß der vorliegenden Erfindung kann das Sahneerzeugniss jedes sein, das als Sahne zum Schlagen auf dem Markt erhaltlich ist. Das heißt, das Sahneerzeugnis kann jene einschließen, die herkömmliche Emulgatoren, Stabilisatoren oder dergleichen enthalten. Des Weiteren können Sahneprodukte jene sein, erhalten durch Ersatz des gesamten oder eines Teils des Milchfetts in Sahne durch Pflanzöl, oder jene, erhalten durch Vermischen von Vollmilch, rekonstituierter Milch, modifizierter Milch oder Magermilch mit Milchfett und/oder Pflanzenöl. Folglich kann die Fett- und Ölfraktion in dem Sahneprodukt Milchfett, Pflanzenöl oder ein Gemisch davon sein. Beispiele für Pflanzenöle, die zur Herstellung des in der vorliegenden Erfindung verwendeten Sahneprodukts verwendet werden, schließen ein, sind aber nicht auf diese beschränkt, Kokosnussöl, Palmöl, Palmkernöl, Sojobohneöl, Canolaöl und Maisöl.

Die in der vorliegenden Erfindung verwendeten Sahneerzeugnisse können des Weiteren Additive umfassen, die bekannt sind, in herkömmliche Sahneerzeugnisse einverleibt zu werden, wie Emulgatoren, Geschmacksmittel, Konservierungsmittel, prebiotische Stoffe, süßstoffe, Lebensmittelsäuren, Säureregulatoren, Verdickungsmittel, und Aromastoffe

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

Weiterhin können erfindungsgemäß bevorzugte Sahneerzeugnisse auch Aromastoffe zur Maskierung von bitteren und/oder adstringierenden Geschmackseindrücken umfassen (Geschmackskorrigentien). Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-N-2-(4-hydroxy-3-methoxyphenyl)-ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine z.B. gemäß WO 2006/106023 (z.B. 2-(4-Hydroxy-3-methoxyphenyl)-1-(2,4,6-tri¬hydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-meth-oxy-phenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß PCT/EP 2006/067120 Diacetyltrimere gemäß WO 2006/058893, Gemische von Molkeproteinen mit Lecithinen und/oder bittermaskierende Substanzen wie Gingerdione gemäß WO 2007/003527.

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (*Beta vulgaris ssp.,* Zuckerfraktionen, Zuckersirup, Melasse), Zuckerrohr (*Saccharum officinarum ssp.,* Melasse, Zuckerrohrsirup), Ahornsirup (*Acer ssp*.) oder Agaven (Agavendicksaft).

In Betracht kommen auch synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

Die Sahneerzeugnisse können Carbonsäuren enthalten. Säuren im Sinne der Erfindung sind bevorzugt in Lebensmitteln zulässige Säuren, insbesondere die hier genannten:
E 260 - Essigsäure
E 270 - Milchsäure
E 290 - Kohlendioxid
E 296 - Apfelsäure
E 297 - Fumarsäure
E 330 - Citronensäure
E 331 - Natriumcitrat
E 332 - Kaliumcitrat
E 333 - Calciumcitrat
E 334 - Weinsäure
E 335 - Natriumtartrat
E 336 - Kaliumtartrat
E 337 - Natrium-Kaliumtartrat
E 338 - Phosphorsäure
E 353 - Metaweinsäure
E 354 - Calciumtartrat
E 355 - Adipinsäure
E 363 - Bernsteinsäure
E 380 - Triammoniumcitrat
E 513 - Schwefelsäure
E 574 - Gluconsäure
E 575 - Glucono-delta-Lacton

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
E 170 - Calciumcarbonat
E 260-263 - Essigsäure und Acetate
E 270 - Milchsäure
E 296 - Äpfelsäure
E 297 - Fumarsäure
E 325-327 - Lactate (Milchsäure)
E 330-333 - Citronensäure und Citrate
E 334-337 - Weinsäure und Tartrate
E 339-341 - Orthophosphate
E 350-352 - Malate (Äpfelsäure)
E 450-452 - Di-, Tri- und Polyphosphate
E 500-504 - Carbonate (Kohlensäure)
E 507 - Salzsäure und ChlorideE 513-517Schwefelsäure und Sulfate
E 524-528 - Hydroxide
E 529-530 - Oxide
E 355-357 - Adipinsäure und Adipate
E 574-578 - Gluconsäure und Gluconate

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
E 400 - Alginsäure
E 401 - Natriumalginat
E 402 - Kaliumalginat
E 403 - Ammoniumalginat
E 404 - Calciumalginat
E 405 - Propylenglycolalginat
E 406 - Agar Agar
E 407 - Carrgeen, Furcelleran
E 407 - Johannisbrotkernmehl
E 412 - Guarkernmehl
E 413 - Traganth
E 414 - Gummi arabicum
E 415 - Xanthan
E 416 - Karaya (Indischer Traganth)
E 417 - Tarakernmehl (Peruanisches Johannisbrotkernmehl)
E 418 - Gellan
E 440 - Pektin, Opekta
E 440ii - Amidiertes Pektin
E 460 - Mikrokristalline Cellulose, Cellulosepulver
E 461 - Methylcellulose
E 462 - Ethylcellulose
E 463 - Hydroxypropylcellulose
E 465 - Methylethylcellulose
E 466 - Carboxymethylcellulose, Natriumcarboxymethylcellulose

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen oralen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).

In einer weiteren Ausgestaltung der Erfindung können die Zubereitungen des Weiteren Prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt.

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propy-lgallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

In einer ganz besonders bevorzugten Ausführungsform enthalten die in der vorliegenden Erfindung verwendeten Sahneerzeugnisse keine Konservierungsmittel, wie z.B Gelatine.

Zur erfindungsgemäßen Herstellung des Sahneerzeugnisses erfolgt zunächst eine erste Homogenisierung - Schritt a) - die eine erste Angleichung der Größe der Fettpartikel hervorruft. Dies findet üblicherweise in einem speziellen Bauteil, vorzugsweise einem Hochdruckhomogenisator statt. Derartige Bauteile sind aus dem Stand der Technik hinreichend bekannt. Das erhaltene Produkt wird danach einem Ultrahocherhitzungsschritt - Schritt b) - unter Standard Bedingungen unterworfen. Das erhaltene Produkt wird dann abgekühlt - Schritt c) -und dann einem zweiten Homogenisierungsschritt - Schritt d) - unterworfen. Um ein Endprodukt mit einer durchschnittlichen Partikelgröße unter 3 µm zu herstellen, wird das erhaltene Produkt anschließend einem schnellen und kurzen Kühlungsschritt unterworfen, um die schnelle Bildung von kleinen Kristallen zu ermöglichen.Schließend wird das erhaltene Produkt abgefüllt.

Um den Effekt der Homogenisierung beurteilen zu können, sind u.a. folgende Analysenmethoden geeignet:
- Mikroskopische Bewertung (Lichtmikroskop, Elektronenmikroskop) in verschiedenen Verdünnungsstufen
- Viskositätsbestimmung, Bestimmung der rheologischen Daten mit diversen Rheometern je nach Viskositätsbereichen und Anwendungen (Kapillarviskosimeter, Viskowaage, Ziehviskosimeter, Rotationsviskosimeter etc.)
- Bestimmung des Homogenisiergrades in % durch Standard-Belastungstests z.B. nach NIZO
- Bestimmung der Partikelgrößenverteilung mit Laserbeugung, Photonenkorrelationsspektroskopie, Trübungsmeßmethode etc.
- Texturmessungen (Texturmessgeräte)

Die Bestimmung der Partikelgrößenverteilung als moderne Analytikmethode ist sehr zuverlässig, und kann vom Fachmann auf der Grundlage seines allgemeinen Wissens vorgenommen werden, ohne dazu erfinderisch tätig zu werden.

Der Homogenisierdruck des Schrittes a) liegt im Bereich von 10 bis 150 bar, vorzugsweise im Bereich von etwa 10 bis etwa 125 bar, insbesondere im Bereich von etwa 15 bis etwa 100 bar.

Die Homogenisiertemperatur des Schrittes a) liegt im Bereich von 50 bis 100 °C, vorzugsweise im Bereich von etwa 55 bis etwa 80 °C.

Aus Qualitätsgründen liegt die Homogenisiertemperatur in einer insbesondere bevorzugten Ausführungsform im Bereich von etwa 60 bis etwa 70 °C, um die thermische Belastung des Produktes nicht zu erhöhen.

Als besonders günstig für die Haltbarkeit des neuartigen Milcherzeugnisses hat sich herausgestellt, wenn der Homogenisierdruck des Schrittes a) im Bereich von etwa 15 bis etwa 100 bar und die Homogenisiertemperatur des Schrittes a) im Bereich von etwa 60 bis etwa 75 °C liegt.

Das erhaltene Produkt aus den Schritten a) und b) wird in einem ersten Kühlungsschritt - Schritt c) - auf eine Temperatur unter 100 °C abgekühlt.

In einer bevorzugten Ausführungsform liegt die Temperatur des Schrittes c) unter etwa 90 °C, besonders bevorzugt unter etwa 80 °C, und insbesondere bevorzugt unter etwa 75 °C.

In einer bevorzugten Ausführungsform liegt die Temperatur des Schrittes c) zwischen etwa 45 und 100 °C, vorzugsweise zwischen etwa 50 und 90 °C, besonders bevorzugt zwischen etwa 55 und 80 °C, und insbesondere bevorzugt zwischen etwa 60 und 75 °C.

Der Homogenisierdruck des Schrittes d) liegt im Bereich von 60 bis 100 bar, vorzugsweise im Bereich von etwa 70 bis etwa 100 bar, inbesondere im Bereich von etwa 80 bis etwa 90 bar.

Die Temperatur des Schrittes d) liegt zwischen 50 und 80 °C, besonders bevorzugt zwischen etwa 55 und 80 °C, und insbesondere bevorzugt zwischen etwa 60 und 75 °C.

Als besonders günstig für die Haltbarkeit des neuartigen Milcherzeugnisses hat sich herausgestellt, wenn der Homogenisierdruck d), und der Homogenisierdruck des Schrittes a) im Bereich von etwa 80 bis etwa 90 bar und die Homogenisiertemperatur des Schrittes d) im Bereich von etwa 60 bis etwa 70 °C liegen.

Es hat sich herausgestellt, dass die technischen Parameter des zweiten Kühlungsschrittes e) die physikalische Stabilität des Endproduktes beeinflussen. Die Auswahl der Temperatur sowie des Zeitintervalles, in dem die Kühlungsschritt e) erfolgen, ist von entscheidender Bedeutung. Nur mittels Durchführung des Schrittes e) unter bestimmten Bedingungen bezüglich Zeit und Temperatur, wird die durchschnittliche Partikelgröße erreicht, die eine verbesserte Haltbarkeit des Endproduktes gewährleisten kann.

Es hat sich herausgestellt, dass Endprodukte mit einer durchschnittlichen Partikelgröße von unter 3 µm eine verbesserte Haltbarkeit aufweisen. Die Temperatur des Schrittes e) liegt zwischen 0 und 10 °C, wobei die Kühlungstemperatur in einem Zeitintervall von 1 bis 10 Sekunden erreicht wird.

Als besonders günstig für die Herstellung des neuartigen Milcherzeugnisses mit einer durchschnittlichen Partikelgröße unter 3 µm hat sich herausgestellt, wenn die Kühlungstemperatur des Schrittes e) zwischen 0 und 6 °C liegt, wobei die Kühlungstemperatur in einem Zeitintervall von 1 bis 10 Sekunden erreicht wird.

Gemäß einer weiteren Ausführungsform wird ein Sahneerzeugnis mit einer durchschnittlichen Partikelgröße von unter 3 µm hergestellt, mittels eines Verfahrens, das folgende Stuffen umfasst:
a) eine erste Hochdruckhomogenisation eines Sahneerzeugnis mit einem Fettgehalt nicht größer als 40 Gew.-% wobei die Temperatur zwischen 60 und 75 °C und der Druck zwischen 10 und 100 bar liegt,
b) eine Ultrahocherhitzung, wobei die Temperatur zwischen 135 und 145 °C liegt,
c) ein erster Kühlungsschritt auf einer Temperatur zwischen 60 und 75 °C,
d) eine zweite Hochdruckhomogenisation, wobei die Temperatur zwischen 60 und 75 °C und der Druck zwischen 80 und 90 bar liegt,
e) ein zweiter Kühlungsschritt einer maximalen Temperatur von 6 °C, wobei die Kühlungstemperatur in einem Zeitintervall von höchstens von 6 Sekunden erreicht wird.

### GEWERBLICHE ANWENDBARKEIT

Gemäß der vorliegenden Erfindung können Sahneerzeugnisse mit einer durchschnittlichen Partikelgröße unter 3 µm hergestellt werden. Die offenbarten Sahneerzeugnisse weisen eine Haltbarkeit von mindestens 4 Wochen auf, jedoch enthalten sie keine Konservierungsmittel. Die offenbarten Sahneerzeugnisse eignen sich insbesondere als Halbfertigprodukte für die gewerbliche Küche.

### BEISPIELE

Die vorliegende Erfindung wird unter Bezugnahme auf die nachstehenden Beispiele leichter zu verstehen sein. Jedoch dienen diese Beispiele lediglich zur Veranschaulichung der Erfindung und können nicht als einschränkend in Bezug auf den Schutzbereich der Erfindung ausgelegt werden.

### Herstellbeispiele 1 bis 7

### Beispiele 1

Schlagsahne 30 Gew.-% Fett wurde in einem Rührbehälter unter ständigen Rühren bei 65 °C erhitzt und anschließend in einem Hochdruckhomogenisator bei 15 bar im Durchlauf septisch homogenisiert. Das Sahneerzeugnis wurde bei 135 °C für 5 Sekunden hochtemperiert und sofort auf 65 °C heruntergekühlt. Das erhaltene Sahneerzeugnis wurde dann unter aseptischen Bedingungen einem zweiten Homogenisierungsschritt bei 80 bar unterworfen. Anschließend wurde die Temperatur des Systems in einem Zeitintervall von 9 Sekunden auf 5°C heruntergekühlt, und das Sahneerzeugnis abgefüllt. Die mittels Laserbeugung bestimmte durchschnittliche Partikelgröße des erhaltenen Sahneerzeugnisses betrug 3 µm.

### Beispiele 2

Schlagsahne 33 Gew.-% Fett wurde in einem Rührbehälter unter ständigen Rühren bei 65 °C erhitzt und anschließend in einem Hochdruckhomogenisator bei 15 bar im Durchlauf septisch homogenisiert. Das Sahneerzeugnis wurde bei 138 °C für 5 Sekunden hochtemperiert und sofort auf 65 °C heruntergekühlt. Das erhaltene Sahneerzeugnis wurde dann unter aseptischen Bedingungen einem zweiten Homogenisierungsschritt bei 80 bar unterworfen. Anschließend wurde die Temperatur des Systems in einem Zeitintervall von 6 Sekunden auf 4°C heruntergekühlt, und das Sahneerzeugnis abgefüllt. Die mittels Laserbeugung bestimmte durchschnittliche Partikelgröße des erhaltenen Sahneerzeugnisses betrug 3 µm.

### Beispiele 3

Schlagsahne 30 Gew.-% Fett wurde in einem Rührbehälter unter ständigen Rühren bei 65 °C erhitzt und anschließend in einem Hochdruckhomogenisator bei 15 bar im Durchlauf septisch homogenisiert. Das Sahneerzeugnis wurde bei 138 °C für 5 Sekunden hochtemperiert und sofort auf 65 °C heruntergekühlt. Das erhaltene Sahneerzeugnis wurde dann unter aseptischen Bedingungen einem zweiten Homogenisierungsschritt bei 85 bar unterworfen. Anschließend wurde die Temperatur des Systems in einem Zeitintervall von 4 Sekunden auf 4°C heruntergekühlt, und das Sahneerzeugnis abgefüllt. Die mittels Laserbeugung bestimmte durchschnittliche Partikelgröße des erhaltenen Sahneerzeugnisses betrug 3 µm.

### Beispiele 4

Schlagsahne extra 36 Gew.-% Fett wurde in einem Rührbehälter unter ständigen Rühren bei 65 °C erhitzt und anschließend in einem Hochdruckhomogenisator bei 10 bar im Durchlauf septisch homogenisiert. Das Sahneerzeugnis wurde bei 140 °C für 3 Sekunden hochtemperiert und sofort auf 68 °C heruntergekühlt. Das erhaltene Sahneerzeugnis wurde dann unter aseptischen Bedingungen einem zweiten Homogenisierungsschritt bei 70 bar unterworfen. Anschließend wurde die Temperatur des Systems in einem Zeitintervall von 5 Sekunden auf 4 °C heruntergekühlt, und das Sahneerzeugnis abgefüllt. Die mittels Laserbeugung bestimmte durchschnittliche Partikelgröße des erhaltenen Sahneerzeugnisses betrug 3 µm.

### Beispiele 5

Schlagsahne 33 Gew.-% Fett wurde in einem Rührbehälter unter ständigen Rühren bei 70 °C erhitzt und anschließend in einem Hochdruckhomogenisator bei 20 bar im Durchlauf septisch homogenisiert. Das Sahneerzeugnis wurde bei 140 °C für 3 Sekunden hochtemperiert und sofort auf 60 °C heruntergekühlt. Das erhaltene Sahneerzeugnis wurde dann unter aseptischen Bedingungen einem zweiten Homogenisierungsschritt bei 90 bar unterworfen. Anschließend wurde die Temperatur des Systems in einem Zeitintervall von 3 Sekunden auf 3 °C heruntergekühlt, und das Sahneerzeugnis abgefüllt. Die mittels Laserbeugung bestimmte durchschnittliche Partikelgröße des erhaltenen Sahneerzeugnisses betrug 2 µm.

### Beispiele 6

Schlagsahne 30 Gew.-% Fett wurde in einem Rührbehälter unter ständigen Rühren bei 67 °C erhitzt und anschließend in einem Hochdruckhomogenisator bei 30 bar im Durchlauf septisch homogenisiert. Das Sahneerzeugnis wurde bei 140 °C für 3 Sekunden hochtemperiert und sofort auf 65 °C heruntergekühlt. Das erhaltene Sahneerzeugnis wurde dann unter aseptischen Bedingungen einem zweiten Homogenisierungsschritt bei 90 bar unterworfen. Anschließend wurde die Temperatur des Systems in einem Zeitintervall von 3 Sekunden auf 3 °C heruntergekühlt, und das Sahneerzeugnis abgefüllt. Die mittels Laserbeugung bestimmte durchschnittliche Partikelgröße des erhaltenen Sahneerzeugnisses betrug 2 µm.

### Beispiele 7

Schlagsahne 35 Gew.-% Fett wurde in einem Rührbehälter unter ständigen Rühren bei 66 °C erhitzt und anschließend in einem Hochdruckhomogenisator bei 20 bar im Durchlauf septisch homogenisiert. Das Sahneerzeugnis wurde bei 138 °C für 3 Sekunden hochtemperiert und sofort auf 62 °C heruntergekühlt. Das erhaltene Sahneerzeugnis wurde dann unter aseptischen Bedingungen einem zweiten Homogenisierungsschritt bei 75 bar unterworfen. Anschließend wurde die Temperatur des Systems in einem Zeitintervall von 3 Sekunden auf 1 °C heruntergekühlt, und das Sahneerzeugnis abgefüllt. Die mittels Laserbeugung bestimmte durchschnittliche Partikelgröße des erhaltenen Sahneerzeugnisses betrug 3 µm.

## Patentansprüche

1. Verfahren zur Herstellung eines Sahneerzeugnisses mit einer durchschnittlichen Partikelgröße unter 3 µm, bei dem man
a) ein Sahneerzeugnis mit einem Fettgehalt nicht größer als 40 Gew.-% einer ersten Hochdruckhomogenisierung bei einer Temperatur im Bereich von 50 °C bis 100 °C unterwirft, wobei der Homogenisierdruck im Bereich von 10 bis 150 bar liegt,
b) das in Schritt a) erhaltene Produkt auf 135 °C bis 150 °C erhitzt,
c) das in Schritt b) erhaltene Produkt auf eine Temperatur unter 100 °C abkühlt,
d) das in Schritt c) erhaltene Produkt einer zweiten Hochdruckhomogenisierung bei einer Temperatur im Bereich von 50 °C bis 80 °C und einem Homogenisierdruck im Bereich von 60 bis 100 bar unterwirft,
e) das in Schritt d) erhaltene Produkt auf eine Temperatur von 0 °C bis 10 °C abkühlt, wobei die Kühlungstemperatur in einem Zeitintervall von 1 bis 10 Sekunden erreicht wird, und
f) das in Schritt e) erhaltene Produkt abfüllt.

2. Verfahren nach Anspruch 1 **dadurch gekennzeichnet, dass** die Homogenisiertemperatur des Schrittes a) im Bereich von 50 °C bis 80 °C liegt.

3. Verfahren nach Anspruch 1**dadurch gekennzeichnet, dass** der Homogenisierdruck des Schrittes a) im Bereich von 10 bis 100 bar liegt, und die Homogenisiertemperatur im Bereich von 60 °C bis 75 °C liegt.

4. Verfahren nach mindestens einem der Ansprüche 1 bis 3 **dadurch gekennzeichnet, dass** die Temperatur des Schrittes b) zwischen 135 °C und 145 °C liegt.

5. Verfahren nach mindestens einem der Ansprüche 1 bis 4 **dadurch gekennzeichnet, dass** die Temperatur des Schrittes c) zwischen 60 °C und 75 °C liegt.

6. Verfahren nach mindestens einem der Ansprüche 1 bis 5 **dadurch gekennzeichnet, dass** der Homogenisierdruck des Schrittes d) im Bereich von 70 bis 90 bar liegt.

7. Verfahren nach mindestens einem der Ansprüche 1 bis 6 **dadurch gekennzeichnet, dass** die Kühlungstemperatur des Schrittes e) zwischen 0 °C und 6 °C liegt, wobei die Kühlungstemperatur in einem Zeitintervall von 1 bis 10 Sekunden erreicht wird.

8. Verfahren nach Anspruch 1, das folgende Stufen umfasst:
a) eine erste Hochdruckhomogenisation eines Sahneerzeugnisses mit einem Fettgehalt nicht größer als 40 Gew.-%, wobei die Temperatur zwischen 60 °C und 75 °C und der Druck zwischen 10 und 100 bar liegt,
b) eine Ultrahocherhitzung wobei die Temperatur zwischen 135 °C und 145 °C liegt,
c) eine erste Kühlungsstufe, bei der die Temperatur zwischen 60 °C und 75 °C liegt,
d) eine zweite Hochdruckhomogenisation, wobei die Temperatur zwischen 60 °C und 75 °C und der Druck zwischen 70 bar und 90 bar liegt,
e) eine zweite Kühlungsstufe, bei der die Temperatur bei maximal 6 °C liegt, wobei die Kühltemperatur in einem Zeitintervall von höchstens von 6 Sekunden erreicht wird.

## Claims

1. A method for producing a cream product having an average particle size of less than 3 µm, comprising the following steps:
(a) subjecting a cream product having a fat content not greater than 40% by weight to a first high-pressure homogenization at a temperature in the range from 50 °C to 100 °C, wherein the homogenization pressure is in the range from 10 to 150 bar,
(b) heating the product obtained in step a) to 135 °C up to 150 °C,
(c) cooling the product obtained in step b) to a temperature below 100°C,
(d) subjecting the product obtained in step c) to a second high-pressure homogenization at a temperature in the range from 50 °C to 80 °C and a pressure in the range from 60 to 100 bar,
(e) cooling the product obtained in step d) to a temperature from 0 °C to 10 °C, wherein the cooling temperature is reached in a time interval from 1 to 10 seconds, and
(f) packaging the product obtained in step e).

2. Method according to claim 1, **characterised in that** the homogenization temperature of step a) is in the range from 50 °C to 80 °C.

3. Method according to claim 1, **characterised in that** the homogenization pressure of step a) is in the range from 10 to 100 bar, and the homogenization temperature is in the range from 60 °C to 75 °C.

4. Method according to at least one of claims 1 to 3, **characterised in that** the temperature of step b) is between 135 °C and 145 °C.

5. Method according to at least one of claims 1 to 4, **characterised in that** the temperature of step c) is between 60 °C and 75 °C.

6. Method according to at least one of claims 1 to 5, **characterised in that** the homogenization pressure of step d) is in the range from 70 to 90 bar.

7. Method according to at least one of claims 1 to 6, **characterised in that** the cooling temperature of step e) is between 0 °C and 6 °C, wherein the cooling temperature is reached in a time interval from 1 to 10 seconds.

8. Method according to claim 1, comprising the following steps
(a) a first high-pressure homogenization of a cream product having a fat content not greater than 40% by weight, wherein the temperature is between 60 °C and 75 °C and the pressure is between 10 and 100 bar,
(b) an ultra heat treatment, wherein the temperature is between 135 °C and 145 °C,
(c) a first cooling stage, in which the temperature is between 60 °C and 75 °C,
(d) a second high-pressure homogenization, wherein the temperature is between 60 °C and 75 °C and the pressure is between 70 bar and 90 bar, and
(e) a second cooling stage, wherein the temperature is a maximum of 6 °C and the cooling temperature is reached in a time interval of at most 6 seconds.

## Revendications

1. Procédé pour la fabrication d'un produit à base de crème, ayant une taille moyenne de particule inférieure à 3 µm, dans lequel
a) on soumet un produit à base de crème, ayant une teneur en matière grasse n'excédant pas 40 % en poids, à une première homogénéisation sous haute pression à une température dans la plage de 50 °C à 100 °C, la pression d'homogénéisation se situant dans la plage de 10 à 150 bars,
b) on chauffe à une température de 135 °C à 150 °C le produit obtenu dans l'étape a),
c) on refroidit jusqu'à une température inférieure à 100 °C le produit obtenu dans l'étape b),
d) on soumet le produit obtenu dans l'étape c) à une seconde homogénéisation sous haute pression à une température dans la plage de 50 °C à 80 °C et sous une pression d'homogénéisation dans la plage de 60 à 100 bars,
e) on refroidit jusqu'à une température de 0 °C à 10 °C le produit obtenu dans l'étape d), la température de refroidissement étant atteinte en un intervalle de temps de 1 à 10 secondes, et
f) on introduit dans des récipients le produit obtenu dans l'étape e).

2. Procédé selon la revendication 1, **caractérisé en ce que** la température d'homogénéisation de l'étape a) se situe dans la plage de 50 °C à 80 °C.

3. Procédé selon la revendication 1, **caractérisé en ce que** la pression d'homogénéisation de l'étape a) se situe dans la plage de 10 à 100 bars, et la température d'homogénéisation se situe dans la plage de 60 °C à 75 °C.

4. Procédé selon au moins l'une quelconque des revendications 1 à 3, **caractérisé en ce que** la température de l'étape b) est comprise entre 135 °C et 145 °C.

5. Procédé selon au moins l'une quelconque des revendications 1 à 4, **caractérisé en ce que** la température de l'étape c) est comprise entre 60 °C et 75 °C.

6. Procédé selon au moins l'une quelconque des revendications 1 à 5, **caractérisé en ce que** la pression d'homogénéisation de l'étape d) se situe dans la plage de 70 à 90 bars.

7. Procédé selon au moins l'une quelconque des revendications 1 à 6, **caractérisé en ce que** la température de refroidissement de l'étape e) est comprise entre 0 °C et 6 °C, la température de refroidissement étant atteinte en un intervalle de temps de 1 à 10 secondes.

8. Procédé selon la revendication 1, qui comprend les étapes suivantes:
a) une première homogénéisation sous haute pression d'un produit à base de à base de crème, ayant une teneur en matière grasse n'excédant pas 40 % en poids, à une première homogénéisation sous haute pression, dans laquelle la température est comprise entre 60 °C et 75 °C et la pression est comprise entre 10 et 100 bars,
b) un chauffage à ultra-haute température, dans laquelle la température est comprise entre 135 °C et 145 °C,
c) une première étape de refroidissement, dans laquelle la température est comprise entre 60 °C et 75 °C,
d) une seconde homogénéisation sous haute pression, dans laquelle la température est comprise entre 60 °C et 75 °C et la pression est comprise entre 70 bars et 90 bars,
e) une seconde étape de refroidissement, dans laquelle la température est au maximum de 6 °C, la température de refroidissement étant atteinte en un intervalle d'au maximum 6 secondes.
